# EUROPEAN PATENT SPECIFICATION

(11) **EP 2 733 227 B1**
(45) Date of publication and mention of the grant of the patent: **02.01.2019**
(21) Application number: 12814884.8
(22) Date of filing: 13.07.2012
(51) Int. Cl.: C22C 5/04, C22C 14/00, C22F 1/14, C22F 1/00

(54) **HIGH-TEMPERATURE SHAPE MEMORY ALLOY AND METHOD FOR PRODUCING SAME**
HOCHTEMPERATUR-FORMGEDÄCHTNISLEGIERUNG UND VERFAHREN ZU IHRER HERSTELLUNG
ALLIAGE À MÉMOIRE DE FORME À HAUTE TEMPÉRATURE ET SON PROCÉDÉ DE PRODUCTION

(30) Priority: 15.07.2011 JP 2011156761
(43) Date of publication of application: 21.05.2014
(73) Proprietor: National Institute for Materials Science, Tsukuba-shi, Ibaraki 305-0047 (JP); IHI Corporation, Tokyo 135-8710 (JP)
(72) Inventor: MITARAI Yoko, Tsukuba-shi Ibaraki 305-0047 (JP); KAWAKITA Mamiko, Tsukuba-shi Ibaraki 305-0047 (JP); PING De-hai, Tsukuba-shi Ibaraki 305-0047 (JP); HARA Toru, Tsukuba-shi Ibaraki 305-0047 (JP); TAKAHASHI Satoshi, Tokyo 135-8710 (JP); TAKAHASHI Madoka, Tokyo 135-8710 (JP)
(74) Representative: Dehns
(86) International application number: PCT/JP2012/067988
(87) International publication number: WO 2013/011959

(56) References cited:
- JP-A- 7 233 432
- JP-A- 9 165 633
- JP-A- H03 253 529
- KIYOSHI YAMAUCHI: 'Saiko Sado Ondo o Shimesu Keijo Kioku Gokin' MATERIA JAPAN vol. 35, no. 11, 1996, JAPAN, pages 1195 - 1198, XP055145826
- G. BOZZOLO ET AL.: 'Phase structure and site preference behavior of ternary alloying additions to PdTi and PtTi shape-memory alloys' INTERMETALLICS vol. 15, no. 7, 2007, pages 901 - 911, XP022035061
- MAMIKO KAWAKITA ET AL.: 'TiPd no Martensite Hentai Ondo to Keijo Kioku Tokusei ni Taisuru Hf?Zr no Koka' COLLECTED ABSTRACTS OF THE JAPAN INSTITUTE OF METALS vol. 149, 20 October 2011, page 509, XP008172936

## Description

### Technical Field

The present invention relates to a high-temperature shape memory alloy and a method for producing of the high-temperature shape memory alloy.

### Background Art

A shape memory alloy typified by TiNi is utilized as an actuator or the like which operates by sensing temperature change without requiring power. This shape memory effect develops in relation to martensitic transformation temperature of a shape memory alloy, and martensitic transformation temperature of a TiNi-based shape memory alloy as a conventional material is so low that the present situation is such that the TiNi-based shape memory alloy may be used only in a temperature range from the neighborhood of room temperature to approximately 100°C.

On the other hand, a shape memory alloy which operates at high temperature is necessary for parts of an actuator used or the like in a high-temperature range, such as a motorcar engine and a jet engine.

An attempt to raise martensitic transformation temperature in relation to the shape memory effect has been made so far by adding Zr, Hf, Pd, and the like to TiNi.

In Patent Literature 1, a Ti-Zr-Ni-based shape memory alloy thin film having a composition such that Zr content is 6.5 to 30 atom%, Ni content is 40 to 50% and the residue is Ti is disclosed.

In Patent Literature 2, a high-transformation temperature shape memory alloy having a composition of M_{A}Ti(_{100-A-B})X_{B}, in which X is Hf or Hf and Zr, M is essentially Ni and an element of one kind or more selected from the group consisting of Cu, Au, Pt, Fe, Mn, V, Al, Pd, Sn, and Co, A is more than 50 atom% and up to 51 atom%, and B is 4 to 49 atom%, is disclosed.

In Patent Literature 3, a high-temperature shape memory alloy having a composition of (Ni+Pt+Y)ₓTi_{(100-y)}, in which x is in a range of 49 to 55 atom%, within the range, Pt is in a range of 10 to 30 atom%, Y is an element of one kind or more of Au, Pd, and Cu and in a range of 0 to 10 atom%, and a minute precipitate of (Ni,Pt)₃Ti₂ type is produced, is disclosed.

In Patent Literature 4, a high-temperature shape memory alloy, in which Ti is 50 to 52 atom%, Pt is 10 to 25 atom%, one kind or more of Au, Pd, and Cu of 5 atom% or less is contained, C of 2 atom% or less is contained, the residue is Ni, and a precipitate of Ti₄(Ni,Pt)₃ type is produced, is disclosed.

In Non Patent Literature 1, the shape memory effect of NiTiPd in which Pd is added to NiTi is described.

In Non Patent Literature 2, the creep characteristics and shape memory effect of Ni₁₀Ti₅₀Pd₄₀ are described.

In Non Patent Literature 3, the shape memory effect of TiPd not containing Ni is described.

Many of these high-temperature shape memory alloys which have been developed so far have a martensitic transformation temperature of 300°C or less, and some of the alloys exhibit a martensitic transformation temperature of 300°C or more; however, the recovery factor is not clearly offered with regard to these alloys, and it is not clear whether the recovery is actually caused. For example, the proposal described in Patent Literature 1 is such that the martensitic transformation end temperature is 200°C or less.

The proposal described in Patent Literature 2 is such as to have a composition of M_{A}Ti_{(100-A-B)}X_{B}, in which X is Hf or Hf and Zr, and M is essentially Ni and an element of one kind or more selected from the group consisting of Cu, Au, Pt, Fe, Mn, V, Al, Pd, Sn, and Co; however, M is essentially Ni, examples are described only with regard to Ni-Ti-Hf, and it is not clear whether the same shape memory effect is obtained in the case of actually using Cu, Au, Pt, Fe, Mn, V, Al, Pd, Sn, and Co instead of Ni. Also, it is only described that Ni is preferably 42 to 50 atom% both singly and together with one kind or more of the above-mentioned other metals.

Also, an alloy exhibiting a martensitic transformation temperature of 300°C or more is offered by five kinds such as Ni-(21 to 31)Ti-(20 to 30)Hf alloy; however, it is not described at all whether the offered alloys including these alloys cause the shape recovery actually, and it is not disclosed whether these alloys function as a high-temperature shape memory alloy.

As described later, when an alloy is deformed at high temperature, permanent strain remains and the shape recovery is caused with difficulty; therefore, whether the alloy functions as a high-temperature shape memory alloy is not found until the recovery factor is observed, and may not be determined only by martensitic transformation temperature.

The proposal described in Patent Literature 3 is such that a recovery factor of 100% is exhibited but the martensitic transformation temperature is 300°C or less.

The proposal described in Patent Literature 4 is such that the martensitic transformation temperature is 100 to 400°C; however, when the martensitic transformation temperature exceeds 400°C, the shape recovery factor decreases due to plastic deformation such that permanent strain remains, and the recovery is scarcely caused. Also, the martensitic transformation temperature of the alloy exhibiting a recovery factor of 100%, which is described as examples, is 300°C or less.

In Patent Literature 5, a shape memory alloy, in which part of Pd is substituted with one kind or two kinds of Ta and W by 1.0 to 25 atom% for the purpose of decreasing the expensive Pd used amount of a TiPd-based alloy (Pd amount: 45 to 51 atom%), is offered, and shape memory is confirmed only at a room temperature of 20°C. Also, the line of 'an element in the neighborhood of 3d elements such as V and Cr was regarded as a transformation point control factor' is described, and the added amount and the effect thereof are not described specifically; as offered in Non Patent Literature 3, the case where the recovery is not caused due to plastic deformation at high temperature is frequent even though the shape recovery is caused after room temperature deformation, so that it is unclear whether the TiPd-based alloy may be used as a high-temperature shape memory alloy.

In Patent Literature 6 (by the same study group as Patent Literature 5), a shape memory alloy, in which part of Pd is substituted with one kind or two kinds of Ta and W by 0.1 to 10 atom% for the purpose of decreasing the expensive Pd used amount of a TiPd alloy, is offered, and the shape recovery is examined only still at room temperature after deformation. As offered in the after-mentioned Non Patent Literature 3, the case where the recovery is not caused due to plastic deformation at high temperature is frequent even though the shape recovery is caused after room temperature deformation, so that it is unclear whether the TiPd-based alloy may be used as a high-temperature shape memory alloy.

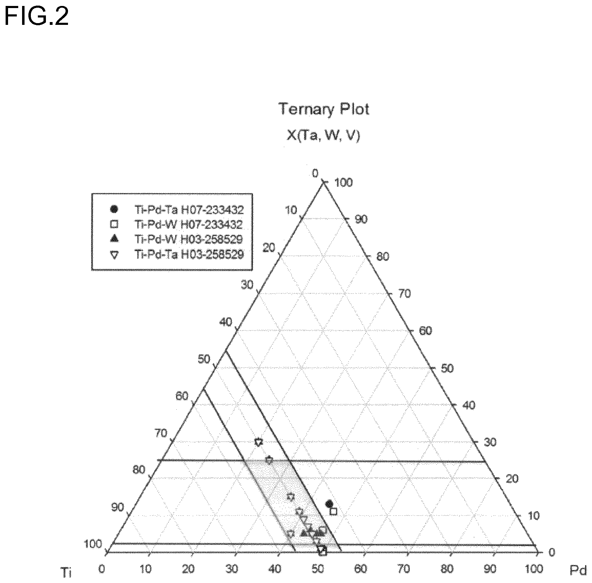

A drawing in which the composition of examples described in Patent Literatures 5 and 6 is plotted is shown in Fig. 2. Also, the composition range of Pd and Ta and W described in Patent Literature 6 is shown by a solid line. When Pd is substituted with another element within a range of 45 to 55 atom% of Pd, Pd + X (X is Ta and W) is maintained at 45 to 55 atom% and the composition range of Ti is 55 to 45 atom%. The alloy compositions described in Patent Literatures 5 and 6 are a range of the parallelogram surrounded and blacked out by a heavy line of Fig. 2.

In Non Patent Literature 1, the shape memory effect of NiTiPd in which Pd is added to NiTi is described; it is described that when Pd is added to NiTi, large recovery factor is exhibited until Pd becomes 25 atom%, and plastic strain is abruptly caused when Pd has a composition of more than 25 atom%, and NiTiPd in which Pd is 46.5 atom% and Ni is 3.5 atom% does not exhibit the recovery at all.

In Non Patent Literature 2, the creep characteristics and shape memory effect of Ni₁₀Ti₅₀Pd₄₀ are described; the martensitic transformation temperature is as high as the neighborhood of 500°C, and significant recovery factor is not found out due to plastic deformation. Also, it is described that the creep minimum speed is larger than NiTi by one to two digits and the deformation at high temperature is clearly fast.

In Non Patent Literature 3, the shape memory effect of TiPd in a binary system is described; it is described that the martensitic transformation temperature is 500°C or more, and the shape recovery is not observed at 400°C or more, and there is a low possibility that TiPd is used as a high-temperature shape memory alloy.

A shape memory alloy is such that a material having a martensitic phase is deformed and thereafter heated to the martensitic transformation temperature or more, so that the martensitic phase is transformed into an austenitic phase as a parent phase to recover the shape. Thus, it is necessary to raise the martensitic transformation temperature for causing the shape recovery at high temperature.

However, when the deformation and shape recovery are repeated at the neighborhood of high martensitic transformation temperature, the martensitic phase is deformed at so high temperature that plastic deformation such that permanent strain remains is frequently caused. When plastic deformation is caused, the shape is not recovered due to the permanent strain, so that the recovery factor decreases.

Through the above, in order to develop a high-temperature shape memory alloy, it is necessary to raise the martensitic transformation temperature and improve the strength of a material at the neighborhood of the transformation temperature.

With regard to a conventional high-temperature shape memory alloy, another element is added to TiNi, in which the martensitic transformation temperature is the neighborhood of room temperature, to utilize the martensitic transformation caused in TiNi, so that there are few alloys exhibiting a transformation temperature of 200°C or more.

Incidentally, with regard to TiPd of Non Patent Literature 3, the martensitic transformation temperature is as high as 500°C or more, and plastic deformation is easily caused and material strength at high temperature runs short. However, it is clear from Non Patent Literatures 1 and 2 that the addition of Ni brings no effect for improving high-temperature strength of TiPd.

### Citation List

### Patent Literature

[Patent Literature 1] JP 2002-285275 A
[Patent Literature 2] JP 5-43969 A
[Patent Literature 3] US 2007/0,204,938 A
[Patent Literature 4] US 7,501,032
[Patent Literature 5] JP 3-253529 A
[Patent Literature 6] JP 7-2334327 A

### Non Patent Literature

[Non Patent Literature 1] G.S. Bigelow, S.A. Padula, A. Garg, D. Gaydosh, R.D. Noebe: Metall. and Mater. Trans. A. 2010, vol. 41A, pp. 3065-79.
[Non Patent Literature 2] P. Kumar, D. C. Lagoudas: Acta Mater. 2010, vol. 58, pp. 1618-28.
[Non Patent Literature 3] K. Otsuka, K. Oda, Y. Ueno, M. Piao, T. Ueki, H. Horikawa, Scripta Met. Mater. 1993; 29: pp. 1355-1358.

### Summary of Invention

### Technical Problem

The present invention has been made for solving the above-mentioned problem in a conventional high-temperature shape memory alloy, and an object of the invention is to provide a high-temperature shape memory alloy, in which a third element except Ni is added to TiPd to thereby improve high-temperature strength and exhibit large shape recovery at high temperature, and a method for producing the high-temperature shape memory alloy.

### Solution to Problem

The present invention is as defined by claims 1-5.

### Advantageous Effects of Invention

The TiPd-based high-temperature shape memory alloy of the present invention allows the high-temperature shape memory alloy, in which strength at high temperature is improved and shape recovery is exhibited in a temperature range of 200°C to 550°C, to be provided.

### Brief Description of Drawings

Fig. 1 is a binary phase diagram of Ti-Pd.
Fig. 2 is an isothermal cross-sectional view showing a composition range of a Ti-Pd-X(Ta, W)-based alloy described in Background Art (Patent Literatures 5 and 6). The alloy composition described in Patent Literatures 5 and 6 is a range of the parallelogram surrounded and blacked out by a heavy line of Fig. 2.
   Incidentally, two plots (Ti42-Pd47-W11), (Ti42-Pd45-Ta13) out of the range of the parallelogram of the described alloy composition is showing the composition of 'Comparative Example' in the Literatures of Background Art, in which a crack is caused in shape recovery to bring insufficient performance.

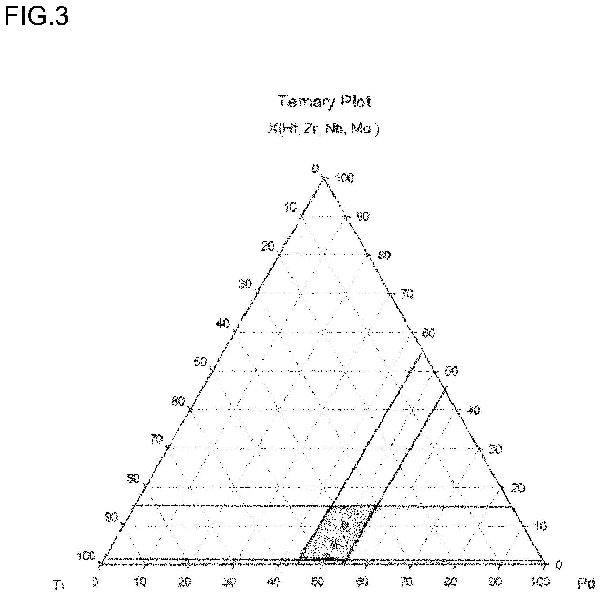

Fig. 3 is an isothermal cross-sectional view showing a composition range of a Ti-Pd-X(Hf, Zr, Nb, Mo)-based alloy of the present invention.

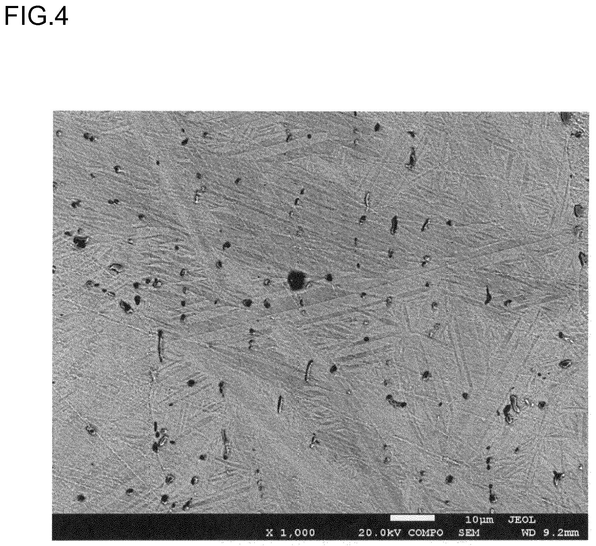

Fig. 4 is a photograph of a structure after Ti-50Pd-5Zr is subject to solution treatment at 1000°C for 168 hours, and thereafter is quenched by ice water.

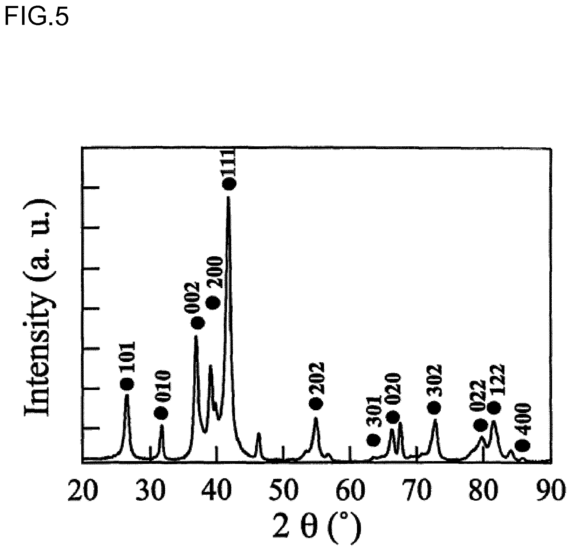

Fig. 5 is an X-ray diffraction diagram of a high-temperature shape memory alloy of Ti-50Pd-5Zr.

### Description of Embodiments

### <Alloy composition of TiPd-based high-temperature shape memory alloy of the present invention>

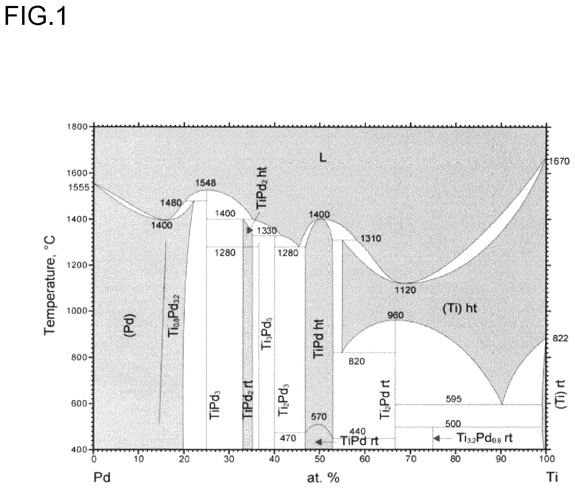

The high-temperature shape memory alloy of the present invention has a TiPd compound as the basic constitution and does not contain Ni. According to the binary phase diagram of Ti-Pd shown in Fig. 1, it is found that the TiPd compound is stably formed in a wide composition range.

Also, in this binary phase diagram, it may be confirmed that the compound exists particularly stably in a composition range of 45 to 55 atom% of Pd, and it is found that the composition range of Pd is 45 to 55 atom%. As clarified in examples shown in the after-mentioned Tables 1 and 2, it is clear that 50 atom% or more of Pd brings high transformation temperature and large shape recovery, so that a more desirable range of Pd is 50 to 55 atom%.

The above-mentioned composition range of Pd allows martensitic transformation temperature of the TiPd compound to be made higher, and consequently allows shape memory effect to be developed at higher temperature. Incidentally, the added amount of Pd out of an added range of the present invention brings a tendency for martensitic transformation temperature to lower.

The present invention is further described hereinafter through the above.

First, in a first aspect of the invention, one kind or more of Hf, Zr, Nb, and Mo as an effective element for improving high-temperature strength of the TiPd compound is added to the TiPd compound so as to substitute part of Ti in a range of 0.1 to 15 atom% with respect to the whole composition. The alloy composition of Pd, Ti and a third element Hf, Zr, Nb, and Mo in this case is a range of a parallelogram surrounded and blacked out by a heavy line of Fig. 3. These additional elements are substituted with Ti more preferably in a range of 2 to 10 atom%.

For example, as described in the after-mentioned example, a shape recovery factor of Ti-45Pd-5Zr such that Pd is substituted with Zr is 16%, whereas a shape recovery factor of Ti-50Pd-5Zr such that Ti is substituted with Zr is 53%; it is found that these elements exhibit higher shape recovery factor by substituting
Ti.

The reason therefor is conceived to be that these elements are elements of the fourth to sixth family in the periodic table, which have similar properties to Ti. It is conceived that the substitution of Pd produces a large defect in a crystal to lower the shape recovery factor even though the substitution of Ti does not produce a large defect in a crystal.

In a second aspect of the invention, one kind or more of Ir and Ru as an effective element for improving high-temperature strength of the TiPd compound is added to the TiPd compound so as to substitute part of Pd in a range of 0.1 to 10 atom% with respect to the whole composition.

These additional elements are substituted with Pd more preferably in a range of 2 to 10 atom%. Ir and Ru are elements of the eighth family, which have similar properties to Pd, and exhibit large shape recovery factor by substituting Pd.

Incidentally, it is necessary to add one kind or more of Hf, Zr, Nb, and Mo by 0.1 atom% or more for improving high-temperature strength; however, the composition range solid-soluble in the TiPd compound is limited, and the added amount of more than 15 atom% occasionally causes the ratio of another phase to increase.

With regard to Ir and Ru, the added amount ought not to exceed 10 atom% for the reason that the added amount of more than 10 atom% makes it difficult to homogenize a non-uniform structure during solution and the shape recovery is damaged.

As a more appropriate case, the added amount of one kind or more of Hf, Zr, Nb, and Mo is determined at a range of 2 to 10 atom%, or the added amount of one kind or more of Ir and Ru is determined at a range of 2 to 10 atom%; therefore, the martensitic transformation temperature of the TiPd compound may be raised further, the effect of increasing high-temperature strength may be improved further, and it becomes more effective to develop a stable shape memory effect in a temperature range of 200°C to 550°C.

### <Method for producing high-temperature shape memory alloy of the present invention>

A typical production process of a high-temperature shape memory alloy of the present invention is as follows. First, a raw material of the high-temperature shape memory alloy of the present invention is dissolved and ingoted. Various kinds of dissolution methods used for a general Ti material dissolution may be adopted for the dissolution and is not particularly limited; examples of these methods include dissolution methods such as an arc melting method, an electron-beam melting method and a high-frequency melting method.

Next, the ingoted raw material is subject to solution treatment of retaining for 0.5 hour or more in a state of sealing in a vacuum vessel with inert gas such as argon gas in a B2 type cubic crystal range as martensitic transformation temperature or more at 600°C or more in a temperature range lower by 100°C
than a temperature such as to produce a liquid phase of the alloy.

The solution treatment needs to be performed for a certain time or more in a B2 type cubic crystal range as martensitic transformation temperature or more for homogenizing a non-uniform structure produced during the dissolution.

The martensitic transformation temperature varies with an alloy composition, and the high-temperature shape memory alloy of the present invention contains a high-melting element, so that it is desirable that the solution treatment temperature is determined at 600°C or more by reason of being sufficiently diffused and homogenized. Also, the B2 type cubic crystal range continues to the melting point, and heat treatment at the neighborhood of the melting point brings a possibility that an ordered state of the crystal is not retained, so that the solution treatment temperature has a temperature lower by 100°C than a temperature such as to produce a liquid phase of the alloy as the upper limit.

The solution treatment time is 0.5 hour or more, preferably in a range of 0.5 to 500 hours. It is desirable that the solution treatment time is determined at 0.5 hour or more by reason of being sufficiently homogenized to make the structure into a uniform state. On the other hand, the solution treatment time has 500 hours as the upper limit for the reason that a constituent element is sufficiently diffused to thereafter cause no change in the structure and consequently too long solution treatment time is uneconomical.

Next, after the solution treatment, the alloy is quenched by introducing into a refrigerant of 0°C or less, such as ice water.

The quenching on the conditions of 0°C or less causes the martensitic transformation and produces a phase of the B19 type rhombic crystal to thereby make a microstructure into a martensitic twin structure. In the case where the cooling rate is slow, a phase of the B2 type cubic crystal occasionally remains without being completely transformed, so that the alloy needs to be quenched into a refrigerant of 0°C or less as instantaneously as possible.

The high-temperature shape memory alloy of the present invention, in which the B19 type rhombic crystal phase occupies 90% or more in volume fraction, may be produced by the above-mentioned producing method. Incidentally, the residual phase contains a second phase produced out of a TiPd-based intermetallic compound phase range.

### Examples

Next, the present invention is specifically described on the basis of examples. Needless to say, the present invention is not limited to these examples at all.

The high-purity element of each alloy composition of Ti-Pd, Ti-Pd-Zr, and Ti-Pd-Hf (atom%) shown in Table 1 was dissolved in a vacuum state by an arc melting method to ingot 20 g of a button-shaped alloy.

Next, this ingoted alloy was wrapped with a Ti foil and sealed up in a vacuumed quartz tube in an argon gas atmosphere. The alloy sealed up in the quartz tube was subject to solution treatment at 1000°C for 168 hours, and thereafter cooled rapidly in ice water to produce an alloy sample.

A photograph of a structure after Ti-50Pd-5Zr is subject to heat treatment at 1000°C for 168 hours, and thereafter is quenched by ice water is shown in Fig. 4.

In this structure photograph of Fig. 4, a minute twin structure is formed in the whole alloy and a typical martensitic structure may be confirmed. A portion except a black granular material with a diameter of approximately several µm in the photograph is a martensitic twin structure, and it may be grasped that approximately 90% in volume fraction corresponds thereto by estimation from area ratio. The black granular material is a second phase produced out of a TiPd-based intermetallic compound phase range.

Also in the alloys of other examples, it is confirmed from the same studies that the volume fraction of a martensitic twin structure is 90% or more.

Also, it was confirmed by the X-ray diffraction diagram shown in Fig. 5 that the alloy contained a B19 type rhombic crystal.

### <Measurement of martensitic transformation temperature>

A test piece of 3 × 3 × 1 mm in each alloy sample was produced for measuring martensitic transformation temperature. This test piece was subject to differential thermal analysis in the air on the conditions of a rate of temperature rise and fall of 10°C per minute to measure martensitic transformation temperature. The results were shown in Table 1.

**[Table 1]**

| | ALLOY SAMPLE | Aₛ(°C) | A_{f}(°C) | Mₛ(°C) | M_{f}(°C) |
|---|---|---|---|---|---|
| COMPARATIVE ALLOY | Ti-50Pd | 568 | 587 | 527 | 515 |
| ALLOY1 | Ti-50Pd-2Hf | 560 | 580 | 510 | 495 |
| ALLOY2 | Ti-50Pd-5Hf | 325 | 360 | 345 | 310 |
| ALLOY3 | Ti-50Pd-10Hf | 226 | 305 | 276 | 188 |
| ALLOY4 | Ti-45Pd-5Hf | - | - | - | - |
| ALLOY5 | Ti-55Pd-5Hf | 510 | 540 | 495 | 480 |
| ALLOY6 | Ti-50Pd-2Zr | - | - | - | - |
| ALLOY7 | Ti-50Pd-5Zr | 492 | 508 | 467 | 445 |
| ALLOY8 | Ti-50Pd-10Zr | 256 | 307 | 221 | 203 |
| ALLOY9 | Ti-45Pd-5Zr | 325 | 370 | 330 | 315 |
| ALLOY10 | Ti-55Pd-5Zr | 520 | 549 | 422 | 370 |

Here, Aₛ, A_{f}, Mₛ, and M_{f} are transformation starting temperature during temperature rise (Aₛ), transformation finishing temperature during temperature rise (A_{f}), transformation starting temperature during temperature fall (Mₛ) and transformation finishing temperature during temperature fall (M_{f}), respectively. With regard to the alloys 1 to 3 and 6 to 8 in which the composition of Pd was 50 atom%, it was confirmed that the increase of the added amount of Hf and Zr caused martensitic transformation temperature to fall and martensitic transformation temperature fell to the 200°C level in the alloys 3 and 8 to which Hf and Zr were added by 10 atom% respectively. Also, in the alloys 5 and 10 in which Hf and Zr had the same composition and Pd was 55 atom%, it was confirmed that martensitic transformation temperature was the 500°C level during temperature rise. On the other hand, in the alloy 9 in which Pd was 45 atom%, martensitic transformation temperature fell to the 300°C level.

Incidentally, with regard to the alloy 4 of Table 1, the transformation temperature may not be detected in the measured temperature range of a device by reason of being low. Also, in the case of the alloy 6, the transformation temperature is not described for the reason that the clearness of a transformation temperature peak is somewhat insufficient.

### <Shape memory recovery factor>

(1) In order to measure shape memory recovery factor, each alloy sample was cut out into a test piece of a cylinder having a diameter of 3 mm and a length of 6 mm as a sample for a high-temperature compression test.
This test piece was subject to a compression test at 380°C on the conditions of a strain rate of 1.2 × 10⁻⁴ m/s to measure test piece length after deformation, and thereafter the test piece was subject to heat treatment at 700°C as martensitic transformation temperature or more for 1 hour, and subject to furnace cooling to room temperature to measure test piece length again and then calculate shape memory recovery factor. The results were shown as 'recovery factor after deformation at 380°C (%)' in Table 2.
The shape memory recovery factor is a ratio between strain of the test piece obtained after the compression test and strain of the test piece recovered after the heat treatment. Incidentally, the alloy such that martensitic transformation temperature was lower than 380°C was not subject to the test.

**[Table 2]**

| | ALLOY SAMPLE | RECOVERY FACTOR AFTER DEFORMATION AT 380°C (%) | RECOVERY FACTOR AFTER DEFORMATION AT Aₛ OR LESS (%) |
|---|---|---|---|
| COMPARATIVE ALLOY | Ti-50Pd | 12 | - |
| ALLOY1 | Ti-50Pd-2Hf | 14 | - |
| ALLOY2 | Ti-50Pd-5Hf | - | 77 (200°C) |
| ALLOY6 | Ti-50Pd-2Zr | 43 | 53 (400°C) |
| ALLOY7 | Ti-50Pd-5Zr | 62 | 53 (460°C) |
| ALLOY8 | Ti-50Pd-10Zr | - | 63 (225°C) |
| ALLOY9 | Ti-45Pd-5Zr | - | 16 (210°C) |
| ALLOY10 | Ti-55Pd-5Zr | 22 | 27 (490°C) |

Ti-50Pd as a comparative alloy exhibited a recovery factor of 12%. When Pd was 50 atom%, the recovery factor of the alloy 2 to which Hf was added by 2 atom% was approximately the same, but the recovery factor of the alloy 6 to which Zr was added by 2 atom% rose to 43%, and the alloy 7 to which Zr was added by 5 atom% exhibited a recovery factor of 62%. On the other hand, in the alloy 10 in which Pd was 55 atom%, it was confirmed that the martensitic transformation temperature was approximately the same as the alloy 7 in which Pd was 50 atom% but the recovery factor fell to 22%.
Also, in the compression test at 380°C, an alloy with low martensitic transformation temperature may not be evaluated and therefore was tested at a temperature lower than the Aₛ temperature to measure recovery factor by the same method as the test at 380°C. The results were also shown in 'recovery factor after deformation at Aₛ or less (%)' in the right column of Table 2.
The Zr-added alloy, which exhibited comparatively large recovery factor in the compression test at 380°C, exhibited large recovery factor also in the compression test at a temperature lower than the Aₛ temperature. In particular, the alloy 6 to which Zr was added by 2 atom% and the alloy 7 to which Zr was added by 5 atom% exhibited a recovery factor of 53% regardless of deformation at a temperature of 400°C or more.
Also, the alloy 8 to which Zr was added by 10 atom% exhibited a recovery factor of 63% though martensitic transformation temperature was as low as the 200°C level. The alloy 10 in which Pd was 55 atom% exhibited as low a recovery factor as 27% similarly to the recovery factor at 380°C. With regard to the Hf-added alloy, the alloy 2 to which Hf was added by 5 atom% exhibited as high a recovery factor as 77%.
It is found from the above-mentioned Table 1 that Pd less than 50 atom%, namely, Ti more than 50 atom% brings a tendency for phase transformation temperature to fall greatly, and it is found from the result of the alloy 9 of Table 2 that Pd less than 50 atom%, namely, Ti more than 50 atom% brings less improvement in shape recovery factor, which is almost the same as TiPd. Accordingly, it is found that a more desirable composition is Pd of 50 atom% or more, namely, Ti of 50 atom% or less.
(2) The test results in the case except Zr and Hf were shown in Tables 3 and 4.

**[Table 3]**

| | Aₛ | Af | Ms | Mf |
|---|---|---|---|---|
| Ti-50Pd-5Nb | 577 | 596 | 427 | 409 |
| Ti-50Pd-5Mo | 251 | 473 | 462 | 286 |
| *Ti-50Pd-5Ta | 586 | 593 | 523 | 513 |
| *Ti-50Pd-5W | 574 | 585 | 518 | 504 |
| *Ti-50Pd-5V | 525 | 562 | 461 | 443 |
| Ti-46Pd-4Ir | 535 | 552 | 510 | 484 |
| Ti-46Pd-4Ru | 359 | 435 | 396 | 321 |
| *Ti-46Pd-4Co | 370 | 386 | 356 | 336 |

| | | | | |
|---|---|---|---|---|
| * Comparative | | | | |

Table 3 shows transformation temperature in the case of adding Nb, Mo to Ti-50 atom% Pd so as to substitute Ti and the case of adding Ir and Ru to Ti-50 atom% Pd so as to substitute Pd. The transformation starting temperature during temperature rise (Aₛ) and the transformation finishing temperature during cooling (M_{f}) fell significantly to 251°C and 286°C respectively due to the addition of Mo; however, except for that, a high transformation temperature of 300°C or more was exhibited.

**[Table 4]**

| | RECOVERY FACTOR (%) |
|---|---|
| Ti-50Pd-5Nb | 37 (378°C) |
| Ti-50Pd-5Mo | 14 (256°C) |
| *Ti-50Pd-5Ta | 35 (483°C) |
| *Ti-50Pd-5W | 21 (474°C) |
| *Ti-50Pd-5V | 50 (413°C) |
| Ti-46Pd-4lr | 51 (320°C) |
| Ti-46Pd-4Ru | 52 (320°C) |
| *Ti-46Pd-4Co | 31 (320°C) |

| | |
|---|---|
| * Comparative | |

Table 4 shows recovery factor obtained in the case of heating to transformation temperature or more after deformation by 5% at a temperature of Aₛ or less. Except that the recovery factor of the Mo-added alloy was 14%, which was almost the same as the recovery factor of the comparative alloy TiPd, all of the alloys exhibited larger recovery than TiPd. This fact signifies that the addition of Nb, Ir and Ru is effective for improving recovery factor.

### Industrial Applicability

A high-temperature shape memory alloy of the present invention is a material for bringing shape recovery by utilizing martensitic transformation caused at high temperature, and may be utilized for an actuator in a high-temperature range, such as a motorcar and a jet engine. Also, except for this, the high-temperature shape memory alloy may be used for an actuator and a control unit of flow and pressure of high-temperature fluid, which operate in a temperature range of 200°C to 500°C.

## Claims

1. A TiPd-based high-temperature shape memory alloy comprising Ti and 45 to 55 atom% of Pd, wherein
either (a) part of the Ti is substituted with one or more of Hf, Zr, Nb, and Mo in a range of 0.1 to 15 atom% with respect to the whole composition, and unavoidable impurities as a residue;
or (b) part of the Pd is substituted with one or more of Ir and Ru in a range of 0.1 to 10 atom% with respect to the whole composition, and unavoidable impurities as a residue;
and wherein for said (a) or (b) the volume fraction of a B19 type rhombic crystal phase is 90% or more, and shape recovery is exhibited in a temperature range of 200°C to 550°C.

2. The high-temperature shape memory alloy according to claim 1, wherein a recovery factor of 10% or more is exhibited by heating to martensitic transformation temperature or more after deformation at 200°C or more.

3. The shape memory alloy according to either of claims 1 and 2, wherein a crystal structure of the high-temperature shape memory alloy is a B19 type rhombic crystal at martensitic transformation temperature or less.

4. The shape memory alloy according to any one of claims 1 to 3, wherein a crystal structure of the high-temperature shape memory alloy is a B2 type cubic crystal at martensitic transformation temperature or more, and changes into a B19 type rhombic crystal through martensitic transformation by cooling so as to make a microstructure of the alloy a martensitic twin structure.

5. A method for producing the high-temperature shape memory alloy according to any one of claims 1 to 4, wherein an ingoted raw material of the shape memory alloy is subject to solution treatment of retaining for 0.5 hour or more in a state of sealing in a vacuum vessel with inert gas in a B2 type cubic crystal range as martensitic transformation temperature or more at 600°C or more in a temperature range lower by 100°C than a temperature such as to produce a liquid phase of the alloy, and thereafter is quenched by putting in a refrigerant of 0°C or less.

## Patentansprüche

1. TiPd basierte Hochtemperatur-Formgedächtnislegierung, umfassend Ti und 45 bis 55 Atom% von Pd, wobei
entweder (a) ein Teil des Ti mit einem oder mehreren von Hf, Zr, Nb und Mo in einem Bereich von 0,1 bis 15 Atom% in Bezug auf die gesamte Zusammensetzung, und unvermeidbaren Verunreinigungen als ein Rest substituiert wird;
oder (b) ein Teil des Pd mit einem oder mehreren von Ir und Ru in einem Bereich von 0,1 bis 10 Atom% in Bezug auf die gesamte Zusammensetzung, und unvermeidbaren Verunreinigungen als ein Rest substituiert wird;
und wobei für das (a) oder (b) der Volumenanteil einer rhombischen Kristallphase vom B19-Typ 90 % oder mehr beträgt, und sich eine Formerholung in einem Temperaturbereich von 200 °C bis 550 °C bemerkbar macht.

2. Hochtemperatur-Formgedächtnislegierung nach Anspruch 1, wobei sich ein Erholungsfaktor von 10% oder mehr durch Erwärmen bis zu einer martensitischen Umwandlungstemperatur oder mehr nach Verformung bei 200 °C oder mehr bemerkbar macht.

3. Formgedächtnislegierung nach einem der Ansprüche 1 und 2, wobei eine Kristallstruktur der Hochtemperatur-Formgedächtnislegierung ein rhombischer Kristall vom B19-Typ bei einer martensitischen Umwandlungstemperatur oder weniger ist.

4. Formgedächtnislegierung nach einem der Ansprüche 1 bis 3, wobei eine Kristallstruktur der Hochtemperatur-Formgedächtnislegierung ein kubischer Kristall vom B2-Typ bei einer martensitischen Umwandlungstemperatur oder mehr ist, und sich in einen rhombischen Kristall vom B19-Typ durch eine martensitische Umwandlung durch Kühlen verwandelt, um aus einer Mikrostruktur der Legierung eine martensitische Doppelstruktur zu machen.

5. Verfahren zur Herstellung der Hochtemperatur-Formgedächtnislegierung nach einem der Ansprüche 1 bis 4,
wobei ein barrenförmiges Rohmaterial der Formgedächtnislegierung einem Lösungsglühen zum Halten für 0,5 Stunden oder mehr in einem Dichtungszustand in einem Vakuumbehälter mit inertem Gas in einem kubischen Kristallbereich vom B2-Typ als martensitische Umwandlungstemperatur oder mehr bei 600 °C oder mehr in einem Temperaturbereich, der um 100 °C niedriger ist als eine Temperatur, sodass eine Flüssigphase der Legierung hergestellt wird, unterliegt, und danach durch Platzieren in ein Kältemittel von 0 °C oder weniger abgeschreckt wird.

## Revendications

1. Alliage à mémoire de forme à température élevée à base de TiPd comprenant du Ti et 45 à 55 % atomique de Pd, dans lequel
soit (a) une partie du Ti est remplacée par l'un ou plusieurs parmi Hf, Zr, Nb, et Mo dans une plage allant de 0,1 à 15 % atomique par rapport à la composition entière, et des impuretés inévitables en tant que résidu ;
soit (b) une partie du Pd est remplacée par l'un ou plusieurs parmi Ir et Ru dans une plage allant de 0,1 à 10% atomique par rapport à la composition entière, et des impuretés inévitables en tant que résidu ;
et dans lequel pour ledit (a) ou (b) la fraction volumique d'une phase cristalline rhombique de type B19 est de 90% ou plus, et la récupération de forme se manifeste dans une plage de températures allant de 200 °C à 550 °C.

2. Alliage à mémoire de forme à température élevée selon la revendication 1, dans lequel un facteur de récupération de 10 % ou plus est obtenu en chauffant jusqu'à une température de transformation martensitique ou plus après déformation à 200 °C ou plus.

3. Alliage à mémoire de forme selon l'une ou l'autre des revendications 1 et 2, dans lequel une structure cristalline de l'alliage à mémoire de forme à température élevée est un cristal rhombique de type B19 à une température de transformation martensitique ou moins.

4. Alliage à mémoire de forme selon l'une quelconque des revendications 1 à 3, dans lequel une structure cristalline de l'alliage à mémoire de forme à température élevée est un cristal cubique de type B2 à une température de transformation martensitique ou plus, et change en un cristal rhombique de type B19 par l'intermédiaire d'une transformation martensitique par refroidissement afin qu'une microstructure de l'alliage devienne une structure martensitique double.

5. Procédé pour produire l'alliage à mémoire de forme à température élevée selon l'une quelconque des revendications 1 à 4,
dans lequel une matière première en lingot de l'alliage à mémoire de forme est soumise à un traitement de mise en solution de retenue pendant 0,5 heure ou plus dans un état d'étanchéité dans un récipient à vide avec un gaz inerte dans une plage de cristal cubique de type B2 en tant que température de transformation martensitique ou plus à 600 °C ou plus dans une plage de températures inférieure de 100 °C à une température telle qu'elle produit une phase liquide de l'alliage, et ensuite est trempée par placement dans un réfrigérant à 0 °C ou moins.
